Europäisches Patentamt

European Patent Office

Office européen des brevets

(11) Publication number: **0 498 409 A1**

# EUROPEAN PATENT APPLICATION

(21) Application number: **92101936.0**

(22) Date of filing: **06.02.92**

(51) Int. Cl.⁵: **C03C 10/04**, H01B 3/08

(30) Priority: **08.02.91 US 653874**

(43) Date of publication of application:
**12.08.92 Bulletin 92/33**

(84) Designated Contracting States:
**DE FR GB IT NL**

(71) Applicant: **E.I. DU PONT DE NEMOURS AND COMPANY**
**1007 Market Street**
**Wilmington Delaware 19898(US)**

(72) Inventor: **Haun, Michael Joseph**
**11 South Holman Way**
**Golden, Colorado 80401(US)**
Inventor: **Hang, Kenneth Warren**
**816 Nathan Hale Drive**
**West Chester, Pennsylvania 19382(US)**
Inventor: **Halliyal, Arvind**
**4621A Oak Valley Road**
**Durham, North Caroline 27707-0000(US)**
Inventor: **Drozdyk, Lorri**
**918 Shorefront Lane**
**Hillsborough, North Caroline 27278-0000(US)**

(74) Representative: **von Kreisler, Alek,**
**Dipl.-Chem. et al**
**Patentanwälte Von Kreisler-Selting-Werner,**
**Deichmannhaus am Hauptbahnhof**
**W-5000 Köln 1(DE)**

(54) **Partially crystallizable glass compositions.**

⑤ The invention is directed to an partially crystallizable alkaline earth zinc silicate glass characterized in that they have a relatively low softening point (below 800°C) and do not undergo substantial crystallization until they reach a firing temperature of 900°C.

EP 0 498 409 A1

Field of Invention

The invention relates to partially crystallizable glass compositions and especially to such compositions which are suitable for use as dielectric layers in microelectronic applications.

Background of Invention

Dielectric materials have traditionally been used for insulating conductor patterns on ceramic substrates. The principal properties required for many such applications have been the electrical properties such as insulation resistance and dissipation factor of the dielectric, as measured with the conductor of choice. Many dielectric materials in use for many years have been non-hermetic type dielectrics; that is, they may contain a significant micro-porosity while meeting all other needs for making crossover and low-layer count multilayers. Typically the choice of thick film conductor (Ag, Cu, Ni or Au) dictated the level of reliability that the circuit may possess due to the tendency of the conductor to migrate and short circuit when exposed to humidity and electric field in use. Noble metals like gold are the most reliable, while base metals like silver are the least reliable. The cost was approximately proportional to the need for reliability.

The trend of the electronic industry has been toward higher circuit density (closer conductor lines) and higher reliability requirements, while at the same time intense pressure for lower costs of manufacture has driven the circuit manufacturer to consider the use of less costly metals such as silver and copper. The industry has been moving toward the use of multilayer circuits. The use of double sided boards with crossovers and finer conductor line geometries, however, has been the first stage in this trend.

To permit the manufacture of reliable circuits, utilizing base metal conductors, dielectric materials which resist migration of conductive materials on the surface or through the bulk of the dielectric are necessary. Since moisture plays a large role in the migration of conductive phases, hermetic dielectric materials are essential. Once the conductor line is sealed between layers of hermetic dielectric, conductor migration ceases to be a serious reliability risk.

In addition, however, to the requirements for sealed conductor structures, the thermal expansion of the dielectric must be carefully matched to the substrate material. The dielectric must also be capable of undergoing multiple reheat cycles to the firing temperature (usually 850°C) without continued migration of the conductive flux through the dielectric. In complex circuits, a large number of refires are frequently necessary. Large numbers of refires and the necessity to reduce cost have made the possibility of co-firing pairs of layers in a multilayer circuit quite desirable.

Most multilayer dielectrics are mixtures of glass and refractory ceramic oxides. They tend to be porous because they are normally formulated with organic binder materials which evolve decomposition gases during thermal processing of applied layers of dielectric, thus leaving open passages in the formed dielectric layers through which these gases have escaped. For this reason multiple print and firing of dielectric layers is commonly performed to close connected porosity.

Many available dielectric materials, after repeated firing of circuits, develop leaky, soft shorts or some hard shorted paths when the dielectric layers are degraded by flux penetration from the base metal conductor. These flux materials after repeated firing chemically reduce to their respective metals/alloys yielding a variety of electrical failure possibilities. The flux materials can become conductive by reduction reactions triggered by binder exhaust gases and residual carbon in the materials.

Summary of the Invention

The invention is directed generally to a family of amorphous, partially crystallizable alkaline earth zinc silicate glass compositions which can be used to prepare dielectric layers either by screen printing in the form of a thick film paste or by lamination in the form of a green tape. They are characterized by the fact that they have a relatively low softening point (below 800°C) and do not undergo substantial crystallization until they reach a firing temperature of 900°C.

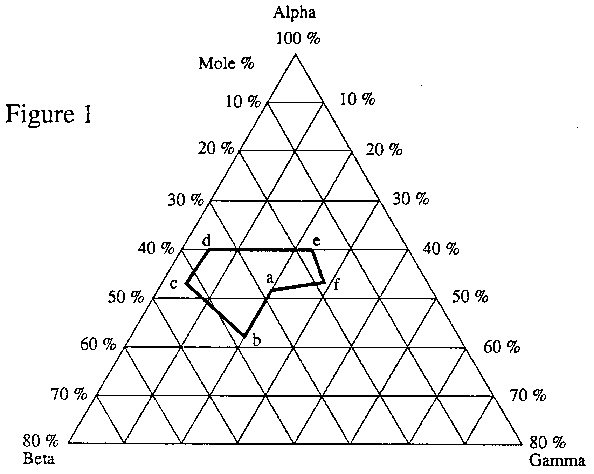

In its primary aspect, the invention is directed to an amorphous, partially crystallizable alkaline earth zinc silicate glass consisting essentially of a composition falling within the area defined in mole % by points A through F of Figure 1 of the Drawing in which:

(1) alpha is $SiO_2$ in admixture with 0.5 to 20% of a glass former or conditional glass former selected from the group consisting of 0.5-10% $Al_2O_3$, 0.5-6% $HfO_2$, 0.5-10% $P_2O_5$, 0.5-6% $TiO_2$, 0.5-6% $ZrO_2$ and mixtures thereof;

(2) beta is an alkaline earth selected from CaO, SrO, MgO, BaO and mixtures thereof; and

(3) gamma is ZnO.

2

In a further aspect, the invention is directed to novel methods of making such glasses.

In a still further aspect, the invention is directed to the manufacture and use of green tapes for use in making dielectric layers from such glasses.

Brief Description of the Drawing

Figure 1 is a ternary phase diagram of a portion of the alkaline earth-ZnO-SiO$_2$ system bounded by the points A through F (in mole %) as follows:

| Vertex | Alpha | Beta | Gamma |
|---|---|---|---|
| Composition | SiO2 | Alkaline Earth | ZnO |
| Point | | | |
| A | 52.0 | 28.0 | 20.0 |
| B | 42.0 | 38.0 | 20.0 |
| C | 53.0 | 42.0 | 5.0 |
| D | 60.0 | 35.0 | 5.0 |
| E | 60.0 | 17.0 | 23.0 |
| F | 52.0 | 19.0 | 29.0 |

Figures 2 and 3 are graphical representations of the differential thermal analysis (DTA) curves of the glasses of the invention as exemplified by Examples 6 and 7 below, respectively.

Prior Art

US 4,323,652, Baudry et al.

The patent is directed to dielectric compositions consisting essentially of 60-85% of a vitreous phase and 40-15% wt. of a ceramic phase. The composition of the vitreous phase is given below:

| Component | Glass Composition (mole %) | Preferred Composition (mole %) | Spontaneously Devitrifiable Composition (mole %) |
|---|---|---|---|
| CaO + SrO + BaO | 5-40 | 15 (BaO) | 23 (CaO) |
| ZnO | 20-40 | 20 | 29 |
| SiO$_2$ | 30-55 | 50 | 48 |
| B$_2$O$_3$ | 0-20 | 5 | |
| Al$_2$O$_3$ | 0-10 | 5 | |
| CoO | 0-10 | 5 | |

The teachings of Baudry et al. are limited to vitreous glasses, the preferred compositions of which do not crystallize when fired at 800-900°C.

U.S. 4,853,349, Martin

The Martin patent is directed to two groups of glass-ceramic materials. The first group contains by weight 1-7.25% MgO, 22-40% CaO, 18-36% Al$_2$O$_3$ and 29-42% SiO$_2$. The second group contains by weight 2-13% ZnO, 22-37.5% CaO, 18-34% Al$_2$O$_3$ and 28-42% SiO$_2$. Such glass-ceramic materials are characterized by the fact that they are formed by crystallization before the onset of deformation (densification). They would therefore be unsuitable for use in thick film dielectrics.

Definitions

As used herein, the term "partially crystallizable glass" means an amorphous glass which upon firing at 800-950°C yields one or more crystalline phases dispersed in a matrix of remnant glass.

Detailed Description of the Invention

The invention is directed to a dielectric glass composition in which ceramic oxide materials are used as fillers to optimize its stable dielectric performance in multilayer circuits. The material may be processed thermally at temperatures in the region of 850°C-900°C in air or inert atmosphere. A printed layer of particulate solids of the dielectric materials when fired will flow and bond strongly to ceramic alumina substrates. The fused layer will strongly resist metal oxide flux penetration into the dielectric. The dielectric materials are formulated to optimize thick film conductor adhesion for both sequentially fired layers of conductor and dielectric or for co-fired layers of dielectric or conductor-dielectric pairs.

A characteristic feature of the glass compositions of the invention is that a wide temperature range occurs between densification and crystallization. The softening temperatures are relatively low (generally < 800°C), while the DTA crystallization does not occur until greater than 900°C. The low softening temperature allows complete densification to occur in one firings at 850°C for 10 minutes, but the high crystallization temperature slows crystallization kinetics, such that crystallization is incomplete in one firing. With a low crystallization rate at 850°C, these glasses provide increased compatibility and adhesion with typical conductor formulations.

The glasses of the invention are compositionally related to those of applicants' copending U.S. patent application, S.N. _____ (EL-0276), filed concurrently herewith. In particular, that application is directed to similar alkaline-earth zinc silicate compositions, except that the ZnO content is higher than the compositions being covered in this proposal. The higher ZnO content lowers the viscosity and causes crystallization to be completed to an end point in one firing at 850°C for 10 minutes. Completed crystallization at 850°C firing, expansion matched to alumina, and excellent electrical properties are characteristic properties of these compositions.

The low viscosity of the glasses described in the copending application allows increased penetration of conductive fluxes such as $Bi_2O_3$ into the dielectric, which in some instances may degrade dielectric properties such as blister resistance in mixed conductor circuits, conductor adhesion and dissipation factor. By using lower amount of ZnO and controlling the ratio of glass formers to glass modifiers in the glasses of this invention, it has been found that glasses can be made which have similarly low softening temperatures, but much higher crystallization temperatures. This relationship decreases the rate of crystallization during an 850°C firing cycle which improves conductor adhesion, while still maintaining good electrical properties and good expansion match to alumina.

In prior art compositions, the use of inorganic fillers is limited by the loss of dielectric hermeticity. However, in the glasses of the invention, the loss of hermeticity due to filler addition is much less. Therefore, higher concentrations of fillers may be used. This, in turn, means that the glasses of the invention have a much wider latitude of formulation to improve the mechanical properties of the dielectric. Since these glasses having higher crystallization temperature also possess low softening temperature, the glasses can be blended in a dielectric formulation with lower temperature crystallizing glasses to provide unique combinations of properties not possible with a single glass composition.

The materials may also be used to formulate a tape dielectric using lamination as the means to make circuits. Subsequent layers of dielectric may be bonded separating base metal circuit patterns forming a multilayer circuit. This glass material crystallizes to a refractory ceramic-glass composite microstructure, which exhibits excellent stability as a ceramic dielectric in multilayer structures involving base metal conductor patterns and additional layers of the same dielectric material, thus forming three dimensional circuit patterns .

Many ceramic oxide filled glass dielectrics for precious metal and base metal inks have been used previously to form multilayer circuits when fired in air. However, base metal conductor inks, which fire in $N_2$ or air used with commercially available dielectric materials, are found to fail by shorting through the dielectric either during firing or during environmental exposure because of interactions which take place between the conductor and dielectric materials. The dielectrics are normally somewhat porous which permits penetration of conductive flux phases into the dielectric layers.

A glass that crystallizes during the firing process is desirable for a thick film dielectric because of its stability during refiring. The softening and densification of the glass must occur at a high enough temperature to allow complete burnout of the organic components of the thick film paste. If the glass densifies before complete burnout, then blistering of the dielectric will often occur due to carbonaceous particles trapped in the material.

To achieve stability on refiring, the crystallization should reach an end point during the first firing with no changes in subsequent refires. Generally 60-75 volume percent crystallization is desired with the remaining composition (remnant glass) forming an amorphous matrix around the crystallites. Crystallization must occur after the glass is completely densified. If premature crystallization occurs the glass will not densify. A temperature range of approximately 10 to 50°C between the completion of densification and the onset of crystallization is desired.

In a typical thick film firing a maximum firing temperature of 850-900°C is held for about ten minutes with a total firing time of only 30-60 minutes. During this rapid firing a dielectric consisting of a crystallizable glass as described above must go through three processes of organic burnout, densification, and crystallization. To form an acceptable dielectric each process must occur quickly and be completed before the next process begins.

In addition to these densification and crystallization requirements the dielectric must have a thermal expansion match to the substrate used (usually alumina), satisfy several electrical requirements (low leakage current and dissipation factor, and high breakdown voltage and insulation resistance), and provide a surface that thick film conductors can adhere to. The material systems that satisfy all of these requirements are very limited, especially when firing at low temperatures, such as 850°C.

Formulating dielectrics with glasses with optimized compositions to resist extensive conductor flux penetration into the dielectric is essential for the manufacture of reliable multilayer circuits with base metal conductors. Dielectrics can be formulated with the glass compositions of the invention which are compatible with pure Ag, Au or Cu conductors or conductors formulated with mixtures or alloys such as Ag/Pd, Ag/Pt, Au/Pt, etc. in different proportions.

The dielectric composition of the invention are therefore directed to partially crystallizable glass compositions that satisfy the thick film dielectric requirements described hereinabove. These compositions are based on the calcium zinc silicate system. A range of compositions within this system have been identified, satisfying the densification, crystallization, and thermal expansion requirements.

Organic Medium

Organic media suitable for use in the invention are selected according to the physical form in which the glass compositions are applied. In particular, the glass frit can be applied as a thick film paste by screen printing and it can also be applied as a green tape.

When the dielectric is applied by screen printing, the particles thereof are mixed with an inert liquid medium (vehicle) by mechanical mixing (eg., on a roll mill) to form a pastelike composition having suitable consistency and rheology for screen printing. The latter is printed as a "thick film" in the conventional manner.

The main purpose of the organic medium is to serve as a vehicle for dispersion of the finely divided solids of the composition in such form that it can readily be applied to ceramic or other substrates. Thus the organic medium must first of all be one in which the solids can be dispersed with an adequate degree of stability. Secondly, the rheological properties of the organic medium must be such that they lend good application properties to the dispersion.

Most thick film compositions are applied to a substrate by means of screen printing. Therefore, they must have appropriate viscosity so that they can be passed through the screen readily. In addition, they should be thixotropic in order that they set up rapidly after being screened, thereby giving good pattern resolution. While the rheological properties are of primary importance, the organic medium is preferably formulated also to give appropriate wettability of the solids and the substrate, good drying rate, dried film strength sufficient to withstand rough handling, and good firing properties. Satisfactory appearance of the fired film is also important.

In view of all these criteria, a wide variety of liquids can be used as organic medium. The organic medium for most thick film compositions is typically a solution of resin in a solvent frequently also containing thixotropic agents and wetting agents. The solvents usually boil within the range of 130-350°C.

Suitable solvents include kerosene, mineral spirits, dibutylphthalate, butyl Carbitol, butyl Carbitol acetate, hexylene glycol and high boiling alcohols and alcohol esters. Various combinations of these and other solvents are formulated to obtain the desired viscosity and volatility.

By far the most frequently used and a frequently preferred resin for this purpose is ethyl cellulose. However, resins such as ethylhydroxyethyl cellulose, wood rosin, mixtures of ethyl cellulose and phenolic resins, polymethacrylates of lower alcohols and monobutyl ether of ethylene glycol monoacetate can also be used.

In the past, poly(alpha-methyl styrene) has been utilized as a resin for thick film applications because of its excellent burn-out properties. However, poly(alpha-methyl styrene) has not been widely used because thick film pastes made therewith have exhibited very poor rheological properties. It has, however, been found that when the compositions of the invention are formulated as thick film pastes using poly(alpha-

5

methyl styrene) dissolved in dibutyl Carbitol, the resulting paste has quite good rheological properties for screen printing. Thus, a preferred organic medium for formulating the compositions of the invention as a thick film paste is a solution of 20-60% wt. poly(alpha-methyl styrene) and 80-40% wt. dibutyl Carbitol and preferably 45-55% wt. poly(alpha-methyl styrene) and 55-45% wt. dibutyl Carbitol.

Among the thixotropic agents which are commonly used are hydrogenated castor oil and derivatives thereof and ethyl cellulose. It is, of course, not always necessary to incorporate a thixotropic agent since the solvent resin properties coupled with the shear thinning inherent in any suspension may alone by suitable in this regard. Suitable wetting agents include phosphate esters and soya lecithin.

The ratio of organic medium to solids in the paste dispersions can vary considerably and depends upon the manner in which the dispersion is to be applied and the kind of organic medium used. Normally, to achieve good coverage, the dispersions will contain complementally by weight 40-90% solids and 60-10% organic medium.

The glass compositions of the invention can also be easily used for the manufacture of green tape by the conventional method. This involves slip casting a slurry of the glass particles dispersed in a solution of binder polymer, plasticizer and volatile solvent onto a flexible carrier such as polypropylene or Mylar® polyester film or stainless steel, adjusting the thickness of the cast film by passing the cast slurry under a doctor blade and then heating the doctored slurry to remove the volatile solvent from the layer by evaporation. The tape consisting of solids dispersed in a matrix of polymeric binder is removed from the carrier and slit to appropriate widths for use in making multilayer structures. Green tapes of this kind generally have a thickness of 3 to 15 mils.

A wide variety of polymeric materials can be used as the binder for green tape such as poly (vinyl butyral), poly (vinyl acetate), poly (vinyl alcohol), cellulosic polymers such as methyl cellulose, ethyl cellulose, hydroxyethyl cellulose, methylhydroxyethyl cellulose, atactic polypropylene, polyethylene, silicon polymers such as poly (methyl siloxane), poly (methylphenyl siloxane), polystyrene, butadiene/styrene copolymer, polystyrene, poly (vinyl pyrrolidone), polyamides, high molecular weight polyethers, copolymers of ethylene oxide and propylene oxide, polyacrylamides, and various acrylic polymers such as sodium polyacrylate, poly (lower alkyl acrylates) poly (lower alkyl methacrylates) and various copolymers and multipolymers of lower alkyl acrylates and methacrylates. Copolymers of ethyl methacrylate and methyl acrylate and terpolymers of ethyl acrylate, methyl methacrylate and methacrylic acid.

A preferred class of polymeric binders for making green tapes for the composition of the invention are those disclosed by Usala in U.S. Patent 4,613,648. These polymeric binders are a mixture of compatible multipolymers of 0-100% wt. $C_{1-8}$ alkyl methacrylate, 100-0% wt. $C_{1-8}$ alkyl acrylate, and 0-5% wt. ethylenically unsaturated carboxylic acid or amine, the multipolymer being further characterized as having a number average molecular weight ($M_n$) of 50,000 to 100,000, a weight average molecular weight ($M_w$) of 150,000 to 350,000, the ratio of $M_w$ to $M_n$ being no greater than 5.5, the total amount of unsaturated carboxylic acid or amine in the multipolymer mixture is 0.2-2.0% wt., and the glass transition temperature of the polymer and plasticizer therein, if any, is -30° to + 45°C.

The organic medium in which the ceramic solids are dispersed contains principally the polymeric binder dissolved in organic solvent. However, the medium may contain other dissolved materials such as plasticizers, release agents, dispersing agents, thixotropic agents, stripping agents, antifouling agents and wetting agents.

For casting solutions, the solvent component of the organic medium is chosen so as to obtain complete solution therein of the polymer and sufficiently high volatility to enable the solvent to be evaporated from the dispersion by the application of relatively low levels of heat at atmospheric pressure. In addition, the solvent must boil well below the boiling point and decomposition temperature of any other additives contained in the organic medium. Thus, solvents having atmospheric boiling points below 150°C are used most frequently. Such solvents include benzene, acetone, xylene, methanol, ethanol, methylethyl ketone, 1,1,1-trichloroethane, tetrachloroethylene, amyl acetate, 2,2,4-triethylpentanediol-1,3-mono isobutyrate, toluene, methylene chloride, 2-propanol and Freon® TF (trichlorotrifluoroethane).

Glass Melting Procedure:

The glasses of the examples were synthesized by weighing raw material constituents which include using the carbonates or the oxides of alkaline earth modifiers such as BaO, CaO, SrO or MgO. ZnO, $SiO_2$ and $Al_2O_3$ were used as oxides. Zircon, $ZrSiO_4$, was used as a source of $ZrO_2$ and $SiO_2$. $AlPO_4$ or $AlP_3O_9$ was used as a source of $P_2O_5$ and $Al_2O_3$. In some cases, calcium phosphate was used as a source of $P_2O_5$ and CaO. After weighing, the oxides are mixed by tumbling or ball milling. They are then melted at 1400-1500°C for less than 1.5 hours in air in platinum containers. The melts are quenched on dry counter-rotating ferrous metal rollers having a 0.010" gap between them to form thin wafer glass ribbon. The cooled ribbon glass is then ground to a coarse powder. The coarse powders are further milled to obtain a 3-5 micron mean particle diameter. The powders are then mixed with organic media to prepare thick film ink or green tape.

Test Procedures

Capacitance: Capacitance is a measure of the capability of a material to store an electric charge. Expressed mathematically,

$$C = E_o KA/_t$$

where A equals area overlap of the conductors, t is thickness of the dielectric layer and K is dielectric constant and $E_o$ is the permittivity of free space. The units of capacitance are farads.

Dissipation Factor: Dissipation Factor (DF) is a measure of the phase difference between voltage and current. In a perfect capacitor, the phase difference would be 90°. However, in practical dielectric systems, DF is less than 90° because of leakage and relaxation losses. In particular, DF is the tangent of the angle by which the current lags the 90° vector.

Insulation Resistance: Insulation resistance (IR) is a measure of the ability of a charge capacitor to withstand leakage in DC current. Insulation resistance is a constant for any given dielectric regardless of capacitance.

Breakdown Voltage: The Breakdown Voltage test (also called the dielectric-strength test) consists of the application of a voltage higher than rated voltage for a specific time between mutually insulated portions of a component part or between insulated portions and ground. The voltage is raised until the component part fails which is indicated by short circuiting. This is used to observe whether the component part can operate safely at its rated voltage and withstand momentary over potentials due to switching, surges, and other similar phenomena. Although this test is often called a voltage breakdown or dielectric-strength test, it is not intended that this test cause insulation breakdown or that it be used for detecting corona. Rather it serves to determine whether the insulating properties of materials and spacings in the component part are adequate. When a component part is faulty in these respects, application of the test voltage will result in either disruptive discharge or deterioration. Disruptive discharge is evidenced by flashover (surface discharge), sparkover (air discharge), or breakdown (puncture discharge). Deterioration due to excessive leakage currents may change electrical parameters or physical characteristics. Dielectric breakdown is reported in volts/mil or volts/cm of dielectric thickness. Dielectric layers are designed to have sufficient thickness to provide a margin of safety well below the breakdown of the dielectric. The test is conducted in accordance with MIL-STD-202E, Apr. 16, 1973.

Leakage Current: The Leakage Current test is a measure of the level of hermeticity of a fired dielectric film as measured by a D.C. voltage-driven electrolytic current when the dielectric is immersed in a saline solution.

Test specimens are prepared by printing a thick film conducting pattern on ten 2" x 2" $Al_2O_3$ substrates. The conductor patterns are oven dried at 110°-120°C and then fired at 850°C. Two layers of patterned dielectric materials are then applied sequentially on top of the fired conductor. Each of the layers is oven-dried at 150°C and fired at 850°C. Thickness of the combined dielectric layers is 30-50 $\mu$m.

These test prints are placed in a prewired connector and positioned in a 1.0N NaCl solution so that the test print is completely immersed. Using a platinum anode, 10 volts are applied between the conductor assembly and anode and the current for each of 10 test samples is measured after 5 mins. under voltage. A leakage current of 1 $\mu$A/cm² or less is considered satisfactory for most circuit requirements.

EXAMPLES

Examples 1-35

A number of glass compositions in accordance with the invention were made by the glass melting procedure described above for the purpose of demonstrating the wide tolerance of the particular range of CaO-ZnO-SiO$_2$ glasses for modifying additives such as $ZrO_2$, $Al_2O_3$, $P_2O_5$, $TiO_2$, and the like. The composition, TCE, and crystallization properties of the glasses are given in Table I below:

**Table 1**

| Example | 1 | 2 | 3 | 4 | 5 | 6 | 7 |
|---|---|---|---|---|---|---|---|

### Glass Composition

| | 1 | 2 | 3 | 4 | 5 | 6 | 7 |
|---|---|---|---|---|---|---|---|
| Mole % | | | | | | | |
| $SiO_2$ | 37.49 | 37.96 | 40.79 | 42.53 | 43.19 | 43.29 | 43.79 |
| ZnO | 21.74 | 26.22 | 23.66 | 24.68 | 23.01 | 25.11 | 20.66 |
| CaO | 23.91 | 26.22 | 26.02 | 27.12 | 21.37 | 27.61 | 26.02 |
| BaO | | | | | | | |
| SrO | | | | | | | |
| MgO | | | | | | | |
| $ZrO_2$ | 1.86 | 2.08 | 2.02 | 2.15 | 5.76 | 2.14 | 2.02 |
| $Al_2O_3$ | 7.50 | 3.76 | 3.76 | 0.93 | 5.69 | 0.93 | 3.76 |
| $P_2O_5$ | 7.50 | 3.76 | 3.76 | 0.93 | 0.99 | 0.93 | 3.76 |
| $TiO_2$ | | | | 1.65 | | | |
| Total | 100 | 100 | 100 | 100 | 100 | 100 | 100 |

### Compositional Groupings

| | 1 | 2 | 3 | 4 | 5 | 6 | 7 |
|---|---|---|---|---|---|---|---|
| Alpha | 54.35 | 47.56 | 50.33 | 48.20 | 55.63 | 47.28 | 53.33 |
| Beta | 23.91 | 26.22 | 26.02 | 27.12 | 21.37 | 27.61 | 26.02 |
| Gamma | 21.74 | 26.22 | 23.66 | 24.68 | 23.01 | 25.11 | 20.66 |
| Total | 100 | 100 | 100 | 100 | 100 | 100 | 100 |

### Glass Properties

| | 1 | 2 | 3 | 4 | 5 | 6 | 7 |
|---|---|---|---|---|---|---|---|
| Softening Temp (C) | 798 | 780 | 781 | 769 | 791 | 769 | 797 |
| 1st Cryst. Temp (C) | 930 | 922 | 971 | 919 | 935 | 939 | 966 |
| 2nd Cryst. Temp (C) | 1004 | | | | | | |
| TCE 10-7/C | 74.2 | 82.2 | 78.1 | 83.5 | 64.0 | 84.3 | 78.1 |

## Table I (continued)

| Example | 8 | 9 | 10 | 11 | 12 | 13 | 14 |
|---|---|---|---|---|---|---|---|
| **Glass Composition** | | | | | | | |
| Mole % | | | | | | | |
| $SiO_2$ | 44.38 | 45.25 | 45.77 | 46.28 | 37.21 | 40.48 | 42.54 |
| ZnO | 23.64 | 24.10 | 20.76 | 16.57 | 24.67 | 26.84 | 24.36 |
| CaO | 21.95 | 22.39 | 24.54 | 28.37 | 17.62 | 19.17 | 17.40 |
| BaO | | | | | 3.68 | 4.00 | 5.47 |
| SrO | | | | | | | |
| MgO | | | | | | | |
| $ZrO_2$ | 3.27 | 3.33 | 1.65 | 1.62 | 1.83 | 1.99 | 2.71 |
| $Al_2O_3$ | 5.80 | 4.92 | 7.29 | 7.17 | 7.50 | 3.76 | 3.76 |
| $P_2O_5$ | 0.97 | | | | 7.50 | 3.76 | 3.76 |
| $TiO_2$ | | | | | | | |
| Total | 100 | 100 | 100 | 100 | 100 | 100 | 100 |
| **Compositional Groupings** | | | | | | | |
| Alpha. | 54.42 | 53.51 | 54.71 | 55.07 | 54.04 | 49.99 | |
| Beta | 21.95 | 22.39 | 24.54 | 28.37 | 21.30 | 23.17 | 22.87 |
| Gamma | 23.64 | 24.10 | 20.76 | 16.57 | 24.67 | 26.84 | 24.36 |
| Total | 100 | 100 | 100 | 100 | 100 | 100 | 100 |
| **Glass Properties** | | | | | | | |
| Softening Temp (C) | 784 | 781 | 812 | 807 | 786 | 776 | 785 |
| 1st Cryst. Temp (C) | 929 | 926 | 920 | 930 | 943 | 942 | 1007 |
| 2nd Cryst. Temp (C) | 1025 | 1000 | 940 | 953 | | | |
| TCE 10-7/C | 64.8 | 69.9 | 63.4 | 72.9 | 75.7 | 77.9 | 74.6 |

9

Table I (continued)

Glass Composition

| Example | 15 | 16 | 17 | 18 | 19 | 20 | 21 |
|---|---|---|---|---|---|---|---|
| Mole % | | | | | | | |
| $SiO_2$ | 43.73 | 46.00 | 46.28 | 48.24 | 38.00 | 40.01 | 41.17 |
| ZnO | 27.93 | 26.34 | 24.55 | 23.66 | 18.34 | 20.34 | 24.47 |
| CaO | 22.85 | 18.82 | 23.27 | 16.91 | 18.82 | 18.82 | 10.42 |
| BaO | 2.43 | 5.91 | 2.14 | 7.49 | 5.91 | 5.91 | 6.74 |
| SrO | | | | | 8.00 | 6.00 | 4.72 |
| MgO | | | | | | | |
| $ZrO_2$ | 1.21 | 2.93 | 1.06 | 3.71 | 2.93 | 2.93 | 1.76 |
| $Al_2O_3$ | 1.42 | | 2.32 | | 8.00 | 6.00 | 6.97 |
| $P_2O_5$ | 0.44 | | 0.38 | | | | 3.76 |
| $TiO_2$ | | | | | | | |
| Total | 100 | 100 | 100 | 100 | 100 | 100 | 100 |

Compositional Groupings

| | 15 | 16 | 17 | 18 | 19 | 20 | 21 |
|---|---|---|---|---|---|---|---|
| Alpha | 46.80 | 48.93 | 50.04 | 51.95 | 48.93 | 48.94 | 53.66 |
| Beta | 25.28 | 24.73 | 25.41 | 24.40 | 32.73 | 30.73 | 21.88 |
| Gamma | 27.93 | 26.34 | 24.55 | 23.66 | 18.34 | 20.34 | 24.47 |
| Total | 100 | 100 | 100 | 100 | 100 | 100 | 100 |

Glass Properties

| | 15 | 16 | 17 | 18 | 19 | 20 | 21 |
|---|---|---|---|---|---|---|---|
| Softening Temp (C) | 760 | 778 | 776 | | 817 | 796 | 782 |
| 1st Cryst. Temp (C) | 910 | 923 | 977 | | 965 | 965 | 929 |
| 2nd Cryst. Temp (C) | 976 | 979 | | | | | |
| TCE 10-7/C | 80.1 | 76.9 | | | | | 68.5 |

Table I (continued)

| Example | 22 | 23 | 24 | 25 | 26 | 27 | 28 |
|---------|-----|-----|-----|-----|-----|-----|-----|

Glass Composition

| Mole % | | | | | | | |
|---------|-----|-----|-----|-----|-----|-----|-----|
| $SiO_2$ | 42.00 | 43.60 | 43.70 | 44.00 | 44.30 | 44.43 | 45.22 |
| ZnO | 22.34 | 24.34 | 25.24 | 24.34 | 26.33 | 20.51 | 26.54 |
| CaO | 18.82 | 15.22 | 16.39 | 18.82 | 11.21 | 13.42 | 14.55 |
| BaO | 5.91 | 5.91 | 5.15 | 5.91 | 7.26 | 3.48 | 4.57 |
| SrO | 4.00 | 4.00 | 3.49 | 2.00 | 5.08 | 8.60 | 3.09 |
| MgO | | | | | | | |
| $ZrO_2$ | 2.93 | 2.93 | 2.55 | 2.93 | 1.89 | 1.14 | 2.93 |
| $Al_2O_3$ | 4.00 | 4.00 | 3.49 | 2.00 | 3.70 | 8.14 | 3.09 |
| $P_2O_5$ | | | | | 0.25 | 0.28 | |
| $TiO_2$ | | | | | | | |
| Total | 100 | 100 | 100 | 100 | 100 | 100 | 99.99 |

Compositional Groupings

| Alpha | 48.93 | 50.53 | 49.74 | 48.93 | 50.14 | 53.99 | 51.24 |
|-------|-------|-------|-------|-------|-------|-------|-------|
| Beta | 28.73 | 25.13 | 25.03 | 26.73 | 23.55 | 25.50 | 22.21 |
| Gamma | 22.34 | 24.34 | 25.24 | 24.34 | 26.33 | 20.51 | 26.54 |
| Total | 100 | 100 | 100 | 100 | 100 | 100 | 99.99 |

Glass Properties

| | | | | | | | |
|---------|-----|-----|-----|-----|-----|-----|-----|
| Softening Temp (C) | 799 | 787 | 778 | 777 | 778 | 803 | 782 |
| 1st Cryst. Temp (C) | 970 | 946 | 941 | 978 | 933 | 926 | 920 |
| 2nd Cryst. Temp (C) | 989 | 1003 | 1008 | | | 982 | 944 |
| TCE 10-7/C | | | | | 66.4 | 64.9 | |

## Table 1 (continued)

| Example | 29 | 30 | 31 | 32 | 33 | 34 | 35 |
|---|---|---|---|---|---|---|---|

### Glass Composition

| Mole % | | | | | | | |
|---|---|---|---|---|---|---|---|
| $SiO_2$ | 46.16 | 47.07 | 50.23 | 50.73 | 52.53 | 55.45 | 41.13 |
| ZnO | 24.54 | 27.51 | 7.73 | 13.96 | 21.53 | 12.60 | 31.38 |
| CaO | 14.09 | 12.93 | 15.90 | 14.37 | | | 22.43 |
| BaO | 6.49 | 4.06 | | 2.03 | 15.19 | 14.06 | 2.73 |
| SrO | 2.75 | 2.75 | | | | | |
| MgO | | | 24.09 | 16.68 | 8.84 | 15.53 | |
| $ZrO_2$ | 3.22 | 2.93 | 0.93 | 1.01 | 1.91 | 2.35 | 1.36 |
| $Al_2O_3$ | 2.75 | 2.75 | 1.13 | 1.22 | | | 0.24 |
| $P_2O_5$ | | | | | | | 0.73 |
| $TiO_2$ | | | | | | | |
| Total | 100 | 100 | 100 | 100 | 100 | 99.99 | 100 |

### Compositional Groupings

| | 29 | 30 | 31 | 32 | 33 | 34 | 35 |
|---|---|---|---|---|---|---|---|
| Alpha | 52.13 | 52.75 | 52.29 | 52.96 | 54.44 | 57.80 | 43.46 |
| Beta | 23.33 | 19.74 | 39.99 | 33.08 | 24.03 | 29.59 | 25.16 |
| Gamma | 24.54 | 27.51 | 7.73 | 13.96 | 21.53 | 12.60 | 31.38 |
| Total | 100 | 100 | 100 | 100 | 100 | 99.99 | 100 |

### Glass Properties

| | 29 | 30 | 31 | 32 | 33 | 34 | 35 |
|---|---|---|---|---|---|---|---|
| Softening Temp (C) | 810 | 777 | 833 | 806 | 804 | 839 | 760 |
| 1st Cryst. Temp (C) | 965 | 947 | 921 | 917 | 912 | 994 | 876 |
| 2nd Cryst. Temp (C) | 1042 | 1016 | | | | | 920 |
| TCE 10-7/C | | | 89.4 | 85.6 | 85.5 | 80.0 | 75.0 |

Table I above lists 35 examples of compositions from the A-F area of Figure 1 with additions of $ZrO_2$, $Al_2O_3$, $P_2O_5$, and/or $TiO_2$. All of these compositions had a low softening temperature with a DTA peak crystallization temperature of 910°C or higher except Example 35, from patent application EL-0276. The TCEs of the glasses vary around that of alumina. A narrow band of composition through the middle of the A-F area of Figure 1 have TCEs closely matched to alumina. Blending of glasses with higher and lower TCEs than alumina can be used and provide an expansion match to the alumina substrate.

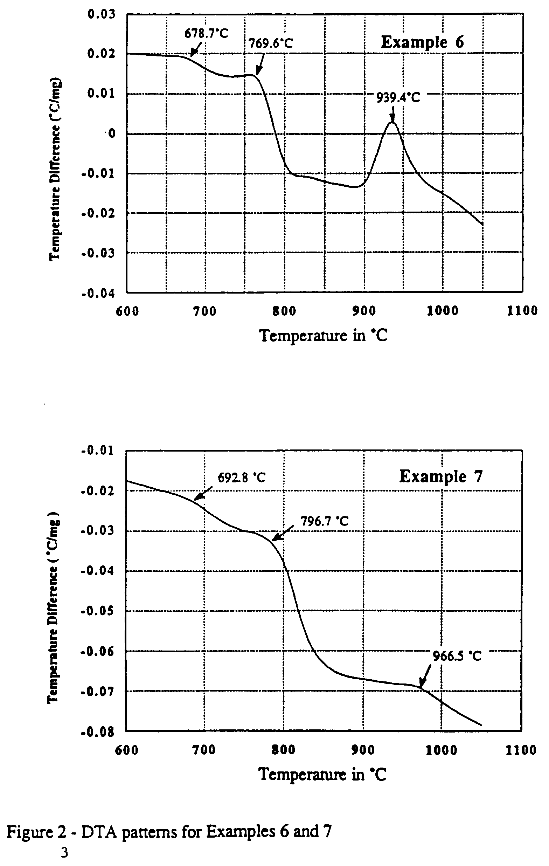

The DTA patterns of the compositions of Examples 6 and 7 are shown in Figure 2. These patterns demonstrate the low softening temperature (< 800°C) and high crystallization temperatures (> 910°C) that can be achieved with these compositions. The crystallization peak of Example 7 composition is very weak, indicating a nearly suppressed rate of crystallization.

The electrical properties of selected compositions with QS170 Ag/Pt conductor and thermal aged adhesion with 6134 and 7474 Ag/Pd conductors are listed in Table II. The circuits were fired in a belt furnance with a peak temperature of 850°C for 10 minutes with a total firing time of 30 minutes. The dielectric thicknesses were approximately 30 $\mu$m.

The softening and crystallization temperatures of each glass were determined by DTA. The linear thermal coefficient of expansion (TCE) was measured from 22-850°C. In the DTA runs, the temperature at which a large endothermic shift occurs prior to crystallization was taken as the softening temperature. This endothermic shift coincides with densification of the glass powder in the sample holder. The crystallization temperatures listed in Table 1 were taken at the maximum of the first and second exothermic peaks. For many of the compositions the first exothermic peak is associated with the crystallization of more than one crystal phase. The crystalline phases were identified by X-ray diffraction. DTA traces of some of the compositions exhibited additional exothermic crystallization peaks at higher temperatures.

Examples 2-26

All the compositions listed in Table II showed very low leakage current (< 1$\mu$A/cm$^2$ indicating good dielectric hermeticity. SEM microstructures of the dielectric cross-sections confirmed this fact, although a small percentage of closed porosity was observed with less than 1/2 $\mu$m sized pores. The breakdown voltages are high exceeding values of 1 KV/mil in all cases. Dielectric constants range from 7 to 10 with dissipation factor of less than 0.32%. The conductor adhesion was measured after aging at 150°C for 100 hours. The conductor adhesion varies with the different compositions, with Example 22 giving the highest adhesion, greater than 25 newtons.

## Table II

### Electrical Properties and Conductor Adhesion

| Glass From Example No. | 2 | 3 | 7 | 13 | 14 | 16 | 18 | 22 | 26 |
|---|---|---|---|---|---|---|---|---|---|
| L.C. ($\mu$A/cm$^2$ | - | - | <1 | - | <1 | <1 | <1 | <1 | <1 |
| BDV (KV/mil) | 1.1 | 1.5 | 2.0 | 2.0 | 1.8 | 2.0 | 1.7 | 1.6 | 1.8 |
| K | 8.2 | 7.8 | 8.1 | 7.1 | 7.7 | 8.9 | 7.7 | 8.1 | 9.8 |
| D.F. (%) | 0.27 | 0.32 | 0.31 | 0.18 | 0.25 | 0.19 | 0.14 | 0.19 | 0.09 |
| Adhesion (N) | | | | | | | | | |
| 6134 | 19 | 20 | 8 | 20 | 16 | 14 | 0 | 28 | 19 |
| 7474 | 25 | 21 | 15 | 16 | 22 | 22 | 18 | 27 | 24 |

Examples of Dielectric Formulations by Glass Blending

Dielectric pastes were made to illustrate the formulation of dielectrics from single glass or mixtures of glasses both with and without ceramic oxide fillers such as alumina. A dielectric can be formulated from two glasses having high and low crystallization temperatures without filler (36) or with 0.7$\mu$m alumina filler (37,38) or formulated with 2.5 $\mu$m alumina filler (39). Dielectrics can also be formulated from a mixture of two glasses, both having higher crystallization temperatures with (40) or without filler. Examples 36, 37, 38, 39 and 40 describe dielectric formulations with two glasses. A single glass with alumina filler is described in 41. The dielectric formulations are listed in Table III below:

## Table III

### Dielectric Formulations, Electrical Properties and Conductor Adhesion Data (%)

| Example | 36 | 37 | 38 | 39 | 40 | 41 |
|---|---|---|---|---|---|---|
| **Composition (weight %)** | | | | | | |
| Glass from Ex. 22 | 50 | 40 | 32 | 39 | 40 | - |
| Glass from Ex. 30 | - | - | - | - | 40 | - |
| Glass from Ex. 35 | 50 | 40 | 48 | 39 | - | - |
| Glass from Ex. 24 | - | - | - | - | - | 80 |
| Alumina 2.5 μm Mean | - | - | - | 22 | 20 | 20 |
| Alumina 0.7 μm Mean | - | 20 | 20 | - | - | - |
| Colorant (CoCr aluminate as % of paste) | 0.4 | 1.0 | 1.0 | 1.0 | 0.4 | 0.4 |

**Electrical Properties**

| Example | 36 | 37 | 38 | 39 | 40 | 41 |
|---|---|---|---|---|---|---|
| **Conductor QS170 (Ag/Pt)** | | | | | | |
| K | 8.8 | 9.4 | | | | |
| DF (%) | 0.11 | 0.8 | | | | |
| BDV (KV/mil) | 1.5 | 1.9 | | | | |
| LC μA/cm$^2$ | < 1 | < 1 | | | | |
| **Conductor 6160 (Ag)** | | | | | | |
| K | | 9.5 | 9.1 | 9.8 | 9.1 | 8.9 |
| DF (%) | | 0.15 | 0.11 | 0.09 | 0.07 | 0.06 |
| BDV (KV/mil) | | 1.6 | 1.5 | 2.0 | 1.9 | 2.1 |
| LC μA/cm$^2$ | | < 1 | < 1 | < 1 | < 1 | < 1 |
| **Conductor 7484 (Ag/Pd)** | | | | | | |
| K | | | 8.2 | 9.5 | 8.9 | 8.8 |
| DF (%) | | | 0.16 | 0.09 | 0.14 | 0.13 |
| BDV (KV/mil) | | | 1.8 | 1.3 | 1.7 | 1.9 |
| LC μA/cm$^2$ | | | < 1 | < 1 | < 1 | < 1 |

| Conductor Adhesion Properties (100 Hr.) | | | | | |
|---|---|---|---|---|---|
| Conductor | Type | Process | Adhesion Values (Newtons) | | |
| | | | 39 | 40 | 41 |
| 6134 | Ag/Pd 6:1 | Co-fire | 29 | 28 | 27 |
| 6134 | Ag/Pd 6:1 | Sequential | 17 | 15 | 15 |
| 7484 | Ag/Pd 6:1 | Sequential | 28 | 29 | 27 |

Good electrical properties are obtained for the dielectric formulations. The dielectric constant (K) ranges from 8.8 to 9. Breakdown voltage values are greater than 1.5 kV/mil. For the alumina filler levels in the dielectrics (up to 22%), the leakage current values indicate good hermeticity. The DF is dependent on the conductor and the alumina filler content in QS170 conductor is near 0.1%; however, addition of filler (37) results in a higher DF near 0.8%. Other conductors such as 6160 or 7484 give DF <0.2% for dielectric containing filler. The electrical properties are affected little by the alumina filler type (compare 37 vs. 39), or by the glasses included (compare 39,40,41). The conductor adhesion of formulations with 6134 and 7484 Ag/Pd conductors are also listed in the table. Good aged adhesion is obtained, but is dependent on the conductor and firing sequence.

Dielectric formulations listed in Table III were formulated by mixing glasses having higher and lower TCE, to match the TCE of the dielectric formulation to that of the alumina substrate. Examples listed in the Table III illustrate that glasses with different crystallization temperatures and TCE can be mixed to formulate dielectrics with optimum properties.

Formulation 36 shows an example in which the dielectric is formulated by mixing the two glasses without filler. The mechanical strength of dielectric (36) can be improved by adding either coarse (2.5 $\mu$m) or fine (0.7 $\mu$m) alumina filler. Examples 37 and 38 were formulated by mixing two glasses with 20% fine alumina filler, and Example 39 with 22% coarse alumina filler. The mechanical strength and scratch resistance of Examples 37, 38 and 39 was superior to that of Example (36). The alumina filler does not influence the electrical properties significantly for 6160 or 7484 (Ag/Pd) conductors. For dielectrics with alumina filler, an increase in dissipation factor was observed for QS170 Ag/Pt conductor.

An improvement in mechanical strength and scratch resistance of dielectrics can be achieved by using one or more of other inorganic fillers such as $TiO_2$, $ZrSiO_4$, $ZrO_2$, $CaZrO_3$, etc. in the 0.5-35 weight % level. The electrical properties of dielectrics formulated with each of the preceding fillers are not influenced in a significant way.

Also, dielectrics can be formulated by mixing more than two glasses to optimize a set of dielectric properties such as thermal expansion match to the alumina substrate, mechanical strength, hermeticity, etc. Further, dielectrics with otpimum properties can be formulated by mixing glasses described in this patent application which crystallize at high temperatures (> 910°C) with glasses crystallizing at lower temperature (<910°C). A dielectric comprised of a suitable mixture of glasses, and an appropriate amount of one or more of the inorganic fillers previously listed is possible with a variety of possible choices.

## Claims

1. An amorphous partially crystallizable alkaline earth zinc silicate glass consisting essentially of a composition falling within the area defined in mole % by point A through F of Figure 1 of the Drawing in which:
   (1) alpha is $SiO_2$ in admixture with 0.5 to 20% of a glass former or conditional glass former selected from the group consisting of 0.5-10% $Al_2O_3$, 0.5-6% $HfO_2$, 0.5-10% $P_2O_5$, 0.5-6% $TiO_2$, 0.5-6% $ZrO_2$ and mixtures thereof;
   (2) beta is an alkaline earth selected from CaO, SrO, MgO, BaO and mixtures thereof; and
   (3) gamma is ZnO.

2. The glass of claim 1 which contains both $Al_2O_3$ and $P_2O_5$ added as $AlPO_4$ or $AlP_3O_9$.

3. The glass of claim 1 having dispersed therein an inorganic filler.

4. A composition for the preparation of the glass of claim 1 consisting essentially of an admixture of finely divided particles of alkaline earth selected from CaO, SrO, MgO, BaO and mixtures thereof in the stoichiometric proportions within the area defined by points A through F of Figure 1.

5. The composition of claim 4 in which the alkaline earth is CaO and the CaO, ZnO and $SiO_2$ are in the form of hardystonite and willemite.

6. A dielectric composition comprising finely divided particles of the amorphous crystallizable composition of claim 1 dispersed in an organic medium.

7. The composition of claim 6 in which the organic medium is a liquid and the composition is a thick film paste.

8. The composition of claim 6 in which the organic medium is a volatilizable solid polymer and the composition is a green tape.

9. A composition for the preparation of green tape by the casting method comprising finely divided particles of the composition of claim 1 dispersed in a liquid solution of volatilizable polymeric binder and volatile solvent.

Figure 1

Figure 2 - DTA patterns for Examples 6 and 7

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| X | EP-A-0 262 974 (RCA CORPORATION) <br> * claims * | 1-9 | C03C10/04 <br> H01B3/08 |
| X | US-A-4 959 330 (DONOHUE) <br> * column 3, line 1 - column 4, line 52; claims * | 1-9 | |
| X | CHEMICAL ABSTRACTS, vol. 108, no. 14, <br> 4 April 1988, Columbus, Ohio, US; <br> abstract no. 117549A, <br> page 330 ; <br> * abstract * <br> & JP-A-62 292 646 (OHARA K.K.) 19 December  1987 | 1,2,4,5 | |
| X | US-A-3 754 881 (PETTICREW) <br> * column 4, line 51 - column 5, line 30 * | 1,4,5 | |
| X | US-A-3 964 917 (NAKAMURA) <br> * column 1, line 25 - line 61 * | 1,4,5 | |
| X | WORLD PATENTS INDEX LATEST <br> Section Ch, Week 8606, <br> Derwent Publications Ltd., London, GB; <br> Class L, AN 86-040719 <br> & SU-A-1 141 076 (N.M.BOBKOVA ET AL.) 23 <br> February 1985 <br> * abstract * | 1 | TECHNICAL FIELDS SEARCHED (Int. Cl.5 ) <br><br> C03C |
| X | SILIKATTECHNIK. <br> vol. 28, no. 7, July 1977, BERLIN DO <br> pages 199 - 201; <br> H.WALTER: 'Werkstoffe im System BaO-ZnO-SiO2.' <br> * the whole document * | 1 | |

-/--

The present search report has been drawn up for all claims

| Place of search | Date of completion of the search | Examiner |
|---|---|---|
| THE HAGUE | 24 APRIL 1992 | VAN BOMMEL L. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| X | JOURNAL OF MATERIALS SCIENCE. vol. 20, no. 10, October 1985, LONDON GB pages 3428 - 3438; ZU-XIONG CHEN ET AL.: 'Microstructure and Properties of MgO-ZnO-SiO2 Alkali-Free Glass-Ceramics.' * page 3428 - page 3429, left column * | 1 | |

-----

TECHNICAL FIELDS
SEARCHED (Int. Cl.5 )

The present search report has been drawn up for all claims

| Place of search | Date of completion of the search | Examiner |
|---|---|---|
| THE HAGUE | 24 APRIL 1992 | VAN BOMMEL L. |

EPO FORM 1503 03.82 (P0401)